# FASCICULE DE BREVET EUROPEEN

(11) **EP 4 558 780 B1**
(45) Date de publication et mention de la délivrance du brevet: **22.04.2026**
(21) Numéro de dépôt: 23742287.8
(22) Date de dépôt: 13.07.2023
(51) Int. Cl.: F42B 10/52, F42B 15/36, F42B 10/46

(54) **VÉHICULE AÉRIEN À OPTIQUE FRONTALE PROTÉGÉE**
LUFTFAHRZEUG MIT GESCHÜTZTEM VORDEREM OPTISCHEN ELEMENT
AIR VEHICLE HAVING A PROTECTED FRONT OPTICAL ELEMENT

(30) Priorité: 21.07.2022 FR 2207475
(43) Date de publication de la demande: 28.05.2025
(73) Titulaire: Safran Electronics & Defense, 75015 Paris (FR)
(72) Inventeur: GUEZ, Lionel, 77550 MOISSY-CRAMAYEL (FR); HAINAU, Thierry, 77550 MOISSY-CRAMAYEL (FR)
(74) Mandataire: Cabinet Boettcher
(86) Numéro de dépôt international: PCT/EP2023/069568
(87) Numéro de publication internationale: WO 2024/017767

(56) Documents cités:
- EP-A1- 2 633 261
- EP-A1- 3 396 300
- CN-A- 114 636 355
- US-A- 3 674 227
- US-A1- 2012 248 236

## Description

La présente invention concerne le domaine des véhicules aériens dont les vecteurs aériens de transport de charge, et notamment les projectiles tels que les missiles et autres munitions guidées.

### ARRIERE PLAN DE L'INVENTION

Il est connu des missiles comprenant un fuselage pourvu d'un dispositif de propulsion et d'ailettes directionnelles reliées à un circuit électronique de guidage et de navigation agencé pour diriger le missile vers une cible. Le fuselage comprend une partie frontale (nez) pourvue d'un ensemble optronique équipé d'un détecteur et relié à la centrale de navigation pour permettre le guidage du missile vers sa cible lorsque le missile est suffisamment proche de sa cible pour qu'elle soit détectée par le détecteur optronique.

Un inconvénient de cet agencement est que la lentille frontale de l'ensemble optronique est soumise à de la pluvio-érosion qui dégrade les performances optiques de la lentille et donc aussi de l'ensemble optronique.

Pour obvier à cet inconvénient, il a été envisagé de réaliser la lentille frontale en un matériau et un traitement moins sensible à la pluvio-érosion. Ceci n'a pas permis d'obtenir l'amélioration des performances escomptée. US 2012/248236 A1 décrit un véhicule aérien comprenant un fuselage suivant le préambule de la revendication 1.

### OBJET DE L'INVENTION

L'invention a notamment pour but de fournir une solution à ce problème sur une majeure partie du domaine de vol du véhicule aérien.

### RESUME DE L'INVENTION

A cet effet, on prévoit, selon l'invention, un véhicule aérien comprenant un fuselage ayant une partie frontale pourvue d'un capteur optronique et d'une coiffe de protection du capteur, la coiffe étant montée de manière amovible et maintenue sur le fuselage par au moins un organe de retenue agencé pour retenir la coiffe à l'encontre d'efforts aérodynamiques s'exerçant sur la coiffe lors du vol, le véhicule aérien comprenant un organe d'inactivation de l'organe de retenue et un circuit électronique de commande agencé pour commander en vol l'organe d'inactivation de manière à permettre une éjection de la coiffe, et la coiffe comprenant, en regard du capteur, une surface interne uniforme permettant de réaliser une calibration du capteur avant l'éjection de la coiffe.

Ainsi, la lentille frontale qui se trouve derrière la coiffe pendant la plus grande partie du vol du véhicule aérien n'est pas soumise à la pluvio-érosion, ceci permettant de garantir les performances attendues de détection du capteur. En phase terminale de vol, la coiffe qui a été éjectée ne masque plus le capteur et n'altère pas les performances aérodynamiques du véhicule aérien (pas d'augmentation de la trainée aérodynamique) comme cela aurait pu être le cas si la coiffe restait accrochée au fuselage après avoir découvert le capteur optronique.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue schématique en élévation d'un missile selon l'invention ;
[Fig. 2] la figure 2 est une vue partielle agrandie, en coupe selon le plan II de la figure 1, de la partie frontale de ce missile ;
[Fig. 3] la figure 3 est une vue partielle, en coupe selon la ligne III-III de la figure 2, de la partie frontale de ce missile ;
[Fig. 4] la figure 4 est une vue de dessus, au travers de la coiffe, du dispositif pyrotechnique et des tirants maintenant la coiffe sur la partie frontale du missile.

### DESCRIPTION DETAILLEE DE L'INVENTION

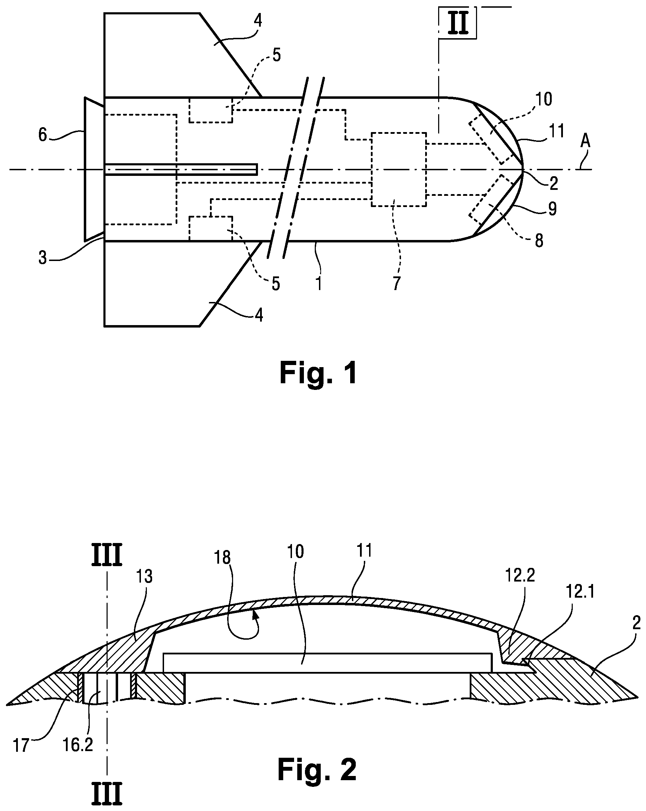

A la figure 1, on a représenté schématiquement un missile comprenant un fuselage 1 de forme globalement cylindrique avec une partie frontale ou avant 2 (couramment appelée nez) et une partie arrière 3 de part et d'autre d'une partie centrale non visible contenant notamment la charge militaire. La partie arrière 3 est pourvue de surfaces de vol 4 formant un empennage. Les surfaces de vol 4 sont orientables chacune par l'intermédiaire d'un actionneur 5 tel qu'un moteur électrique. La partie arrière 3 accueille en outre un propulseur 6 comme un réacteur à simple ou double flux, un statoréacteur... Le propulseur 6 et les actionneurs 5 sont reliés à un circuit électronique de guidage 7 comportant notamment au moins un processeur et une mémoire contenant un programme exécutable par le processeur et agencé pour guider le missile en commandant au moins les actionneurs 5.

Sur la partie frontale 2, sont montés deux capteurs optroniques, à savoir un capteur optronique 8 positionné sous une lentille 9 et un capteur optronique 10 disposé sous une coiffe 11. Le deuxième capteur 8 est disposé hors de la coiffe 11 de telle manière que la coiffe 11 n'entrave pas le fonctionnement du capteur 8 pendant toute la phase de vol. Les capteurs optroniques 8 et 10 sont reliés au circuit électronique de guidage 7 et émettent des signaux images utilisés pour le guidage du missile, le capteur optronique 10 étant en particulier utilisé pour le guidage du missile dans sa phase terminale de vol. Le capteur optronique 10 est ici un détecteur infrarouge d'un autodirecteur du missile. Le guidage en lui-même est connu et ne sera pas plus détaillé ici.

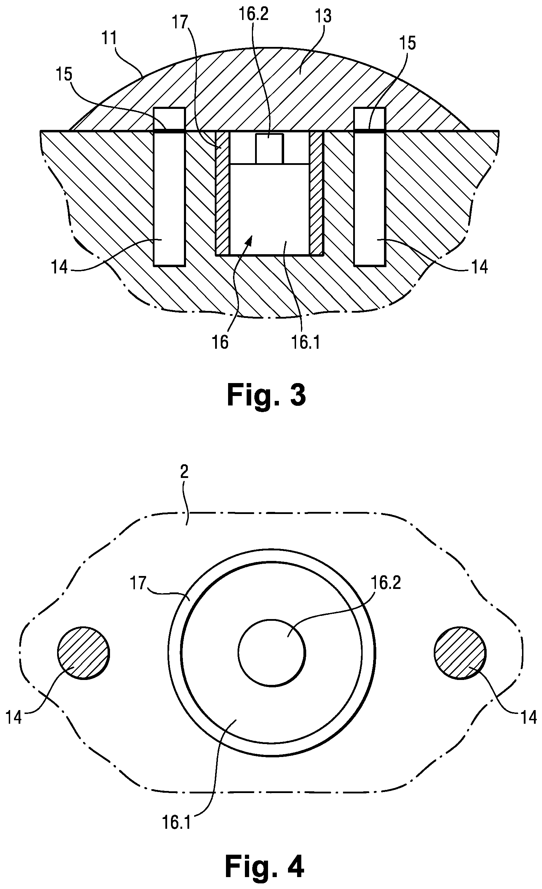

En référence également aux figures 2 à 4, la coiffe 11 est agencée pour assurer une protection de la lentille frontale du capteur optronique 10 et est montée de manière amovible sur la partie avant 2. En particulier, la coiffe 11 protège la lentille frontale du capteur optronique 10 vis-à-vis de la pluvio-érosion.

Plus précisément, la partie avant 2 du fuselage 1 comporte un premier élément de pivot 12.1 autour d'un axe transversal à un axe longitudinal A du fuselage 1 et la coiffe 11 comporte un deuxième élément de pivot 12.2 en butée contre le premier élément de pivot 12.1 de telle manière que :
- le premier élément de pivot 12.1 retienne le deuxième élément de pivot 12.2 tant que la coiffe n'est pas éjectée, et
- le deuxième élément de pivot 12.2 échappe au premier élément de pivot 12.1 lorsque ladite portion 13 de la coiffe 11 est décollée du fuselage.

Le premier élément de pivot 12.1 a ici une forme de bec sous lequel est engagé le deuxième élément de pivot 12.2 qui a lui-même une forme de bec complémentaire de celle du premier élément de pivot 12.1.

Cet élément de pivot peut aussi être réalisé à l'aide d'une fixation ou tout autre élément mécanique dimensionné de telle manière qu'il puisse se rompre ou se séparer après décollement de la coiffe 11.

La portion 13 de la coiffe 11 est maintenue sur la partie avant 2 du fuselage 1 par au moins un organe de retenue agencé pour retenir la portion 13 et donc la coiffe 11 à l'encontre d'efforts aérodynamiques s'exerçant sur la coiffe 11 lors du vol du missile.

Il y a ici deux organes de retenue sous la forme chacun d'un tirant 14 ayant une extrémité fixée à la partie avant 2 et une extrémité fixée à la portion 13 de la coiffe 11. Entre ces deux extrémités, chaque tirant 12 comprend une amorce de rupture 15, ici une gorge formant une restriction de section s'étendant sur le tirant 12 sensiblement dans un plan de joint entre la partie avant 2 et la coiffe 11. Entre les deux tirants 14 s'étend un organe pyrotechnique 16 comportant un corps 16.1 solidaire de la partie avant 2 et un piston 16.2 mobile par rapport au corps 16.1 depuis une position rentrée vers une position sortie sous l'action d'une charge pyrotechnique contenue dans le corps 14.1. L'organe pyrotechnique 16 est entouré au moins partiellement par une paroi de confinement 17 agencée pour empêcher que l'éclatement de la charge pyrotechnique ne dégrade la structure et le fonctionnement des autres sous-ensembles du missile. La paroi de confinement est en outre de préférence isolée thermiquement. L'organe pyrotechnique 16 est agencé pour exercer sur la portion 13 de la coiffe 11 un effort supérieur à un effort maximal de retenue exercé par les tirants 14 sur la coiffe 11. Un tel organe pyrotechnique est connu en-lui-même. Le piston 16.2 et les tirants 14 ont ici des axes centraux situés dans un même plan. Les tirants 14 sont donc disposés en alignement avec le point de poussée du piston 16.2 sur la portion 13 et ce point de poussée est diamétralement opposé aux éléments de pivot 12.1, 12.2.

L'organe pyrotechnique 16 est relié au circuit électronique de guidage 7 et forme un organe d'inactivation de la retenue de la coiffe 11 : l'organe pyrotechnique 16 est en effet disposé et dimensionné pour exercer sur la coiffe 11 une poussée suffisante pour briser les tirants 14 au niveau de l'amorce de rupture 15.

Le circuit électronique de guidage 7 est agencé pour commander en vol l'organe pyrotechnique 16 de manière à permettre une éjection la coiffe 11, une partie du flux aérodynamique s'engouffrant sous la portion 13 décollée du fuselage par le piston 16.2 et soulevant la coiffe 11. Le circuit électronique de guidage 7 comprend un moyen pour détecter un début de phase terminale de vol du missile et est agencé pour commander l'organe pyrotechnique 16 et l'inactivation des moyens de retenue une fois la phase terminale de vol commencée : le capteur optronique 10 est alors découvert et peut assurer sa fonction de transmission d'images pour le guidage terminal du missile. La détection du début de phase terminale de vol du missile est obtenue par exemple par mesure de la durée du vol en considérant que la phase terminale de vol intervient après un temps prédéterminé de vol, ou en fonction d'une position GNSS si le missile embarque un récepteur de signaux provenant de satellites d'un système global de navigation par satellites, ou autre...) .

On notera que l'organe pyrotechnique 16 est dimensionné pour permettre la rupture des tirants 14 et l'éjection de la coiffe 11 alors que la coiffe 11 est soumise à une pression aérodynamique, et éventuellement que le missile subit des chocs, vibrations, accélérations linéaires et angulaires, et ce quelles que soient les conditions climatiques (présence de givre, gel ou de glace en particulier) . Pour faciliter l'éjection de la coiffe 11, le circuit électronique de guidage peut être agencé pour orienter le missile dans une position favorisant l'action du flux aérodynamique, par exemple en commandant un mouvement du missile en roulis.

La coiffe 11 comprend, en regard du capteur optronique 10, une surface interne 18 uniforme et le circuit électronique de guidage 7 est agencé pour réaliser une calibration du capteur optronique 10 avant l'éjection de la coiffe 11. Une telle calibration, connue en elle-même, permet d'améliorer les performances du capteur optronique 10 lors de sa phase de vie opérationnelle. Toute la surface interne de la coiffe 11 peut être uniforme ou seulement la partie de la surface interne couverte par le champ du capteur optronique 10 utilisé pour la calibration. On notera également que la coiffe 11 a un volume limité, de préférence au maximum, pour s'étendre juste au-dessus du capteur optronique 10 (c'est-à-dire au plus près du capteur optronique 10 en tenant compte des jeux de fabrication, de montage et de fonctionnement) de telle manière que le profil du missile après éjection de la coiffe 11 soit très proche du profil du missile avant éjection de la coiffe 11 et ne modifie pas significativement le comportement aérodynamique du véhicule aérien après éjection de la coiffe. Il résulte de ce volume limité une masse limitée de sorte que l'éjection de la coiffe 11 n'entraine pas une modification de la masse globale du missile et de la répartition des masses dans celui-ci qui soit préjudiciable au pilotage du missile. Le pilotage du missile n'est pas ou que peu altéré par l'éjection de la coiffe 11. On agencera avantageusement aussi la partie avant du missile sous la coiffe pour que le profil aérodynamique du missile reste sensiblement le même avant et après éjection de la coiffe. Ce concept prévoit un dispositif de sécurité permettant d'empêcher l'éjection de la coiffe 11 lors des manipulations du missile. Ce dispositif comprend par exemple un coupe contact empêchant l'activation de l'organe pyrotechnique et un élément mécanique s'opposant à l'éjection de la coiffe 11 telle une goupille ou autre système mécanique. Bien entendu, l'invention n'est pas limitée au mode de réalisation décrit mais englobe toute variante entrant dans le champ de l'invention telle que définie par les revendications.

En particulier, le véhicule aérien peut avoir une structure différente de celle décrite.

L'organe pyrotechnique et le point de pivot ne sont pas obligatoires. La partie frontale du fuselage peut avoir la forme d'une face plane et inclinée par rapport à l'axe longitudinal du fuselage de telle manière que, lors de l'inactivation des organes de retenue, la coiffe glisse sur la face plane sous la pression de l'air avant d'être éjectée vers l'arrière.

On peut prévoir un organe de retenue en deux parties opposées de la coiffe et un organe pyrotechnique associé à celui-ci.

A la place d'un organe pyrotechnique, on peut utiliser un dispositif mécanique capable de libérer une énergie nécessaire à l'éjection de la coiffe. L'énergie nécessaire à l'éjection de la coiffe 11 est de préférence transmise soit par l'organe pyrotechnique 16 ou tout autre système mécanique possédant une réserve énergétique.

Les tirants peuvent être fragilisés pour limiter la charge pyrotechnique. Il est possible également de fragiliser l'un au moins des points de fixation des tirants.

Il est également possible d'aménager des zones fragilisées directement intégrées à la coiffe qui viennent se rompre sous l'effet de l'actionneur et ainsi remplacer les tirants par des systèmes standards de fixation. Pour le maintien de la coiffe sur le véhicule aérien, au lieu de tirants ou de vis, on peut utiliser tout autre dispositif de retenue comme des clips, des goupilles ou des genouillères, des systèmes de maintien par verrouillage peuvent être envisagés comme par exemple un verrou engagé dans une gâche de la coiffe et commandé par un actionneur. Le véhicule aérien peut comprendre plusieurs circuits électroniques disposés à divers endroits dans le fuselage pour assurer chacun une ou plusieurs fonctions et reliés de manière à former un circuit électronique de guidage comme décrit ci-dessus. Le mot fuselage est ici employé au sens large pour désigner non seulement l'enveloppe externe du missile mais également la structure/armature interne de celui-ci.

La rupture du tirant 14 peut être assurée soit au niveau du tirant ou bien au niveau de zones fragilisées aménagées dans la coiffe 11.

L'élément de pivot peut aussi être réalisé à l'aide d'une fixation ou tout autre élément mécanique dimensionné de telle manière qu'il puisse se rompre ou se séparer après décollement de la coiffe 11.

De préférence, le module de pilotage est agencé pour orienter le véhicule aérien en phase terminale de vol du véhicule aérien de manière à bénéficier des efforts aérodynamiques participant à l'éjection de la coiffe 11. Ainsi, à l'actionnement de l'organe pyrotechnique la coiffe 11 est au moins en partie décollée du fuselage sur l'avant de celui-ci : le missile est alors orienté pour que le vent relatif s'engouffre entre la coiffe 11 et le fuselage pour favoriser l'éjection de la coiffe 11. Ceci peut être obtenu par un mouvement de roulis ou par un mouvement de dérive selon l'orientation de la partie soulevée par rapport à la direction d'avancement du missile.

## Revendications

1. Véhicule aérien comprenant un fuselage (1) ayant une partie frontale (2) pourvue d'un capteur optronique (10) et d'une coiffe (11) de protection du capteur, la coiffe étant montée de manière amovible et maintenue sur le fuselage par au moins un organe de retenue (14) agencé pour retenir la coiffe à l'encontre d'efforts aérodynamiques s'exerçant sur la coiffe lors du vol, le véhicule aérien comprenant un organe (16) d'inactivation de l'organe de retenue et un circuit électronique de commande (7) agencé pour commander en vol l'organe d'inactivation de manière à permettre une éjection de la coiffe, **caractérisé en ce que** la coiffe (11) comprend, en regard du capteur, une surface interne (18) uniforme permettant de réaliser une calibration du capteur (10) avant l'éjection de la coiffe.

2. Véhicule aérien selon la revendication 1, dans lequel l'organe de retenue est un tirant (14) et l'organe d'inactivation est un organe pyrotechnique (16) disposé et dimensionné pour briser le tirant.

3. Véhicule aérien selon la revendication 2, dans lequel la rupture du tirant (14) peut être assurée soit au niveau du tirant ou bien au niveau de zones fragilisées aménagées dans la coiffe (11).

4. Véhicule aérien selon la revendication 1, dans lequel l'énergie nécessaire à l'éjection de la coiffe (11) est transmise soit par l'organe pyrotechnique (16) ou tout autre système mécanique possédant une réserve énergétique.

5. Véhicule aérien selon la revendication 2 ou 4, dans lequel le tirant (14) et l'organe pyrotechnique (16) sont disposés en proximité de manière à optimiser le rendement énergétique de l'organe pyrotechnique (16) sur la coiffe (11).

6. Véhicule aérien selon la revendication 2, dans lequel l'organe pyrotechnique (16) est entouré, au moins partiellement, par une paroi de confinement (17).

7. Véhicule aérien selon l'une quelconque des revendications 2 à 5, dans lequel l'organe pyrotechnique (16) est agencé pour exercer sur la coiffe (11) un effort supérieur à la combinaison d'un effort maximal de retenue exercé par le tirant (14) sur la coiffe et des efforts d'environnement extérieurs.

8. Véhicule aérien selon la revendication 1, dans lequel la coiffe (11) est agencée de manière à bénéficier des efforts aérodynamiques participant à son éjection.

9. Véhicule aérien selon l'une quelconque des revendications précédentes, dans lequel le fuselage (1) comporte un premier élément de pivot (12.1) autour d'un axe transversal à un axe longitudinal (A) du fuselage et la coiffe (11) comporte un deuxième élément de pivot (12.2) en butée contre le premier élément de pivot de telle manière que :
- le premier élément de pivot retienne le deuxième élément de pivot tant que la coiffe a une portion (13) opposée aux éléments de pivot (12.1, 12.2) maintenue appliquée contre le fuselage (1), et
- le deuxième élément de pivot (12.2) échappe au premier élément de pivot (12.1) lorsque ladite portion (13) de la coiffe est décollée du fuselage.

10. Véhicule aérien selon la revendication 9, dans lequel l'élément de pivot peut aussi être réalisé à l'aide d'une fixation ou tout autre élément mécanique dimensionné de telle manière qu'il puisse se rompre ou se séparer après décollement de la coiffe (11).

11. Véhicule aérien selon l'une quelconque des revendications précédentes, dans lequel la coiffe (11) a un volume limité pour s'étendre juste au-dessus du capteur optronique (10).

12. Véhicule aérien selon la revendication 11, dans lequel la coiffe (11) est agencée pour que le véhicule aérien a des profils après éjection de la coiffe (11) et avant éjection de la coiffe (11) qui soient proches l'un de l'autre..

13. Véhicule aérien selon l'une quelconque des revendications précédentes, dans lequel le module de pilotage est agencé pour orienter le véhicule aérien en phase terminale de vol du véhicule aérien de manière à bénéficier des efforts aérodynamiques participant à l'éjection de la coiffe (11).

14. Véhicule aérien selon l'une quelconque des revendications précédentes, comprenant au moins un deuxième capteur (8) disposé hors de la coiffe (11) et la protection du capteur optronique avec ladite coiffe (11) permettant la fonctionnalité du capteur (8) pendant toute la phase de vol.

## Patentansprüche

1. Flugkörper, umfassend einen Rumpf (1) mit einem vorderen Teil (2), der mit einem optronischen Sensor (10) und einer Schutzhaube (11) zum Schutz des Sensors versehen ist, wobei die Schutzhaube abnehmbar angebracht ist und an dem Rumpf durch zumindest ein Halteorgan (14) festgehalten wird, welches derart ausgelegt ist, dass es aerodynamischen Kräften, die während des Fluges auf die Schutzhaube einwirken, standhält und so die Schutzhaube in Position gehalten wird, wobei der Flugkörper ein Inaktivierungsorgan (16) zur Inaktivierung des Halteorgans und einen elektronischen Steuerstromkreis (7) umfasst, der dafür ausgelegt ist, das Inaktivierungsorgan während des Fluges derart anzusteuern, dass ein Abwurf der Schutzhaube ermöglicht wird, **dadurch gekennzeichnet, dass** die Schutzhaube (11) dem Sensor gegenüberliegend eine gleichmäßige Innenfläche (18) zur Durchführung einer Kalibrierung des Sensors (10) vor dem Abwurf der Schutzhaube umfasst.

2. Flugkörper nach Anspruch 1, wobei es sich bei dem Halteorgan um eine Zugstange (14) und bei dem Inaktivierungsorgan um ein pyrotechnisches Organ (16) handelt, das derart angeordnet und dimensioniert ist, dass es ein Brechen der Zugstange gewährleistet.

3. Flugkörper nach Anspruch 2, wobei der Bruch der Zugstange (14) entweder an der Zugstange selbst oder im Bereich von an der Schutzhaube (11) definierten Schwachstellen erfolgen kann.

4. Flugkörper nach Anspruch 1, wobei die für den Abwurf der Schutzhaube (11) erforderliche Energie entweder von dem pyrotechnischen Organ (16) oder von einem beliebigen anderen mit einer Energiereserve ausgestatteten mechanischen System übertragen wird.

5. Flugkörper nach Anspruch 2 oder 4, wobei die Zugstange (14) und das pyrotechnische Organ (16) so nahe beieinander angeordnet sind, dass der energetische Wirkungsgrad des pyrotechnischen Organs (16) auf die Schutzhaube (11) optimiert wird.

6. Flugkörper nach Anspruch 2, wobei das pyrotechnische Organ (16) zumindest teilweise von einer Begrenzungswand (17) umgeben ist.

7. Flugkörper nach einem der Ansprüche 2 bis 5, wobei das pyrotechnische Organ (16) dafür ausgelegt ist, eine Kraft auf die Schutzhaube (11) auszuüben, die größer ist als die durch die Zugstange (14) auf die Schutzhaube ausgeübte maximale Haltekraft und die äußeren Umgebungskräfte zusammen genommen.

8. Flugkörper nach Anspruch 1, wobei die Schutzhaube (11) derart ausgelegt ist, dass die an ihrem Abwurf beteiligten aerodynamischen Kräfte vorteilhaft genutzt werden können.

9. Flugkörper nach einem der vorhergehenden Ansprüche, wobei der Rumpf (1) ein erstes Schwenkelement (12.1) enthält, das um eine quer zu einer Längsachse (A) des Rumpfes verlaufende Achse herum schwenkbar ist, und die Schutzhaube (11) ein zweites Schwenkelement (12.2) enthält, das gegen das erste Schwenkelement anliegt, sodass:
- das erste Schwenkelement das zweite Schwenkelement in Position hält, solange ein den Schwenkelementen (12.1, 12.2) entgegengesetzter Abschnitt (13) der Schutzhaube gegen den Rumpf (1) in Anlage gehalten wird, und
- das zweite Schwenkelement (12.2) aus dem ersten Schwenkelement (12.1) herausgleitet, sobald besagter Abschnitt (13) der Schutzhaube von dem Rumpf abgelöst wird.

10. Flugkörper nach Anspruch 9, wobei das Schwenkelement auch mittels einer Befestigung oder eines beliebigen anderen mechanischen Elements ausgebildet sein kann, das derart dimensioniert ist, dass es nach Ablösung der Schutzhaube (11) bricht oder abgetrennt wird.

11. Flugkörper nach einem der vorhergehenden Ansprüche, wobei die Schutzhaube (11) einen derart begrenzten Umfang aufweist, dass sie sich genau über dem optronischen Sensor (10) erstreckt.

12. Flugkörper nach Anspruch 11, wobei die Schutzhaube (11) derart ausgelegt ist, dass der Flugkörper vor dem Abwurf der Schutzhaube (11) und nach der Abwurf der Schutzhaube ein (11) ähnliches Profil aufweist.

13. Flugkörper nach einem der vorhergehenden Ansprüche, wobei das Steuerungsmodul dafür ausgelegt ist, den Flugkörper in der Flugendphase des Flugkörpers derart auszurichten, dass die an dem Abwurf der Schutzhaube (11) beteiligten aerodynamischen Kräfte vorteilhaft genutzt werden können.

14. Flugkörper nach einem der vorhergehenden Ansprüche, umfassend zumindest einen zweiten Sensor (8), der außerhalb der Schutzhaube (11) angeordnet ist, wobei der Schutz des optronischen Sensors durch die Schutzhaube (11) es ermöglicht, die Funktionstüchtigkeit des Sensors (8) während der gesamten Flugphase zu gewährleisten.

## Claims

1. An aerial vehicle comprising a fuselage (1) having a front portion (2) provided with an optronic sensor (10) and a cover (11) for protecting the sensor, the cover being removably mounted and held on the fuselage by at least one retaining member (14) arranged to retain the cover against aerodynamic forces exerted on the cover during flight, the aerial vehicle comprising a member (16) for deactivating the retaining member and an electronic control circuit (7) arranged to control the deactivation member in flight so as to allow the cover to be ejected, **characterized in that** the cover (11) comprises, facing the sensor, a uniform internal surface (18) making it possible to calibrate the sensor (10) before the cover is ejected.

2. The aerial vehicle according to Claim 1, wherein the retaining member is a tie rod (14) and the deactivation member is a pyrotechnic member (16) arranged and sized so as to break the tie rod.

3. The aerial vehicle according to Claim 2, wherein the tie rod (14) may be broken either at the tie rod itself or at weakened areas arranged in the cover (11).

4. The aerial vehicle according to Claim 1, wherein the energy required to eject the cover (11) is transmitted either by the pyrotechnic member (16) or by any other mechanical system having an energy reserve.

5. The aerial vehicle according to Claim 2 or 4, wherein the tie rod (14) and the pyrotechnic member (16) are arranged in proximity so as to optimise the energy efficiency of the pyrotechnic member (16) on the cover (11).

6. The aerial vehicle according to Claim 2, wherein the pyrotechnic member (16) is surrounded, at least partially, by a containment wall (17).

7. The aerial vehicle according to any one of Claims 2 to 5, wherein the pyrotechnic member (16) is arranged to exert on the cover (11) a force greater than the combination of a maximum retaining force exerted by the tie rod (14) on the cover and the external environmental forces.

8. The aerial vehicle according to Claim 1, wherein the cover (11) is arranged so as to benefit from the aerodynamic forces involved in its ejection.

9. The aerial vehicle according to any of the preceding claims, wherein the fuselage (1) comprises a first pivot element (12.1) about an axis transverse to a longitudinal axis (A) of the fuselage and the cover (11) comprises a second pivot element (12.2) coming to rest against the first pivot element in such a way that:
- the first pivot element retains the second pivot element as long as the cover has a portion (13) opposite the pivot elements (12.1, 12.2) held applied against the fuselage (1), and
- the second pivot element (12.2) escapes from the first pivot element (12.1) when said portion of the cover (13) is detached from the fuselage.

10. The aerial vehicle according to Claim 9, wherein the pivot element may also be made using an attachment or any other mechanical element sized in such a way that it may break or separate after the cover is detached (11).

11. The aerial vehicle according to any preceding claim, wherein the cover (11) has a limited volume to extend just above the optronic sensor (10).

12. The aerial vehicle according to Claim 11, wherein the cover (11) is arranged so that the aerial vehicle has profiles after ejection of the cover (11) and before ejection of the cover (11) which are close to one another.

13. The aerial vehicle according to any one of the preceding claims, wherein the control module is arranged to orientate the aerial vehicle in the terminal phase of flight of the aerial vehicle so as to benefit from the aerodynamic forces involved in ejecting the cover (11).

14. The aerial vehicle according to any one of the preceding claims, comprising at least one second sensor (8) arranged outside the cover (11) and the protection of the optronic sensor with said cover (11) allowing the functionality of the sensor (8) throughout the entire flight phase.
